# EUROPÄISCHE PATENTSCHRIFT

(11) **EP 3 865 756 B1**
(45) Veröffentlichungstag und Bekanntmachung des Hinweises auf die Patenterteilung: **22.04.2026**
(21) Anmeldenummer: 20156525.6
(22) Anmeldetag: 11.02.2020
(51) Int. Cl.: F16L 47/03, B29C 65/34, B29C 65/00, H01R 13/00

(54) **ELEKTROSCHWEISSFITTING**
ELECTRIC WELDING FITTING
RACCORD DE SOUDURE ÉLECTRIQUE

(43) Veröffentlichungstag der Anmeldung: 18.08.2021
(73) Patentinhaber: Georg Fischer Wavin AG, 8201 Schaffhausen (CH)
(72) Erfinder: Mayer, Karl-Heinz, 78224 Singen (DE); Hüssy, Jonas, 8213 Neunkirch (CH)
(74) Vertreter: Fenner, Seraina

(56) Entgegenhaltungen:
- EP-A1- 0 919 761
- WO-A1-2010/071589
- CH-A- 553 368
- DE-A1- 102013 009 687
- DE-A1- 2 311 279
- FR-A1- 2 221 679
- GB-A- 2 137 026
- GB-A- 2 415 024
- JP-A- 2005 331 051
- JP-A- H1 151 279
- US-A- 4 622 087
- ANONYMOUS: "Radius Electrofusion fittings brochure", RADIUS, 1 September 2018 (2018-09-01), pages 1 - 28, XP093343555
- ANONYMOUS: "Specialist Drainage Systems Soil & Waste System, Specification manual", AKATHERN, 1 January 2018 (2018-01-01), pages 1 - 148, XP093343560

## Beschreibung

Die Erfindung betrifft ein Elektroschweissfitting aus Kunststoff zum Verschweissen von Kunststoffrohrleitungen gemäß dem Oberbegriff des Anspruchs 1.

Ein solches Elektroschweissfitting ist aus der JP 2005 331051 A bekannt.

Hauptsächlich in den letzten Jahren werden aus Gewichts- und Korrosionsgründen im Rohrleitungsbau vermehrt Rohrleitungen aus thermoplastischen Kunststoffen verwendet, im Speziellen für den Bau von Rohrleitungsnetzen für die Gas- und Wasserversorgung, sowie zum Fördern von Luft, Abwasser oder auch Chemikalien. Die eingesetzten Rohrleitungen sind meist aus druckfestem Kunststoff. Zur Verbindung solcher Rohrleitungen werden oft aus Effizienzgründen Elektroschweissfittings verwendet, welche eine Heizdrahtwicklung im Innern aufweisen um die Rohre mit dem Fitting zu verschweissen.

Um bei der Montage festzustellen ob die Rohrenden genügend tief in das Elektroschweissfitting eingeschoben sind, weist das Fitting im Inneren einen Anschlag auf. Aufgrund des Anschlags kann der Monteur feststellen, dass das Rohrende bis an die gewünschte Position eingeschoben ist. Nachteilig hierbei ist, wenn ein solches Elektroschweissfitting als Überschiebfitting zu montieren ist. Das heisst, das Elektroschweissfitting wird zuerst beinahe vollständig über das eine Rohrende geschoben und dann in die Gegenrichtung über das zweite Rohrende. Um diese Art der Montage durchführen zu können, muss der Anschlag immer zuerst entfernt werden. Dies ist mit einem hohen Zusatzaufwand verbunden und ist meist nicht einfach umzusetzen da das Fitting gerne an seinem Innendurchmesser beschädigt wird. Eine Herstellung von zwei unterschiedlichen Fittings, das heisst, eine mit Anschlag und eine ohne Anschlag, ist aus wirtschaftlicher Sicht nicht gerechtfertigt da Spritzgusswerkezuge teuer in ihrer Anschaffung und im Unterhalt sind zumal das auch noch auf unterschiedliche Durchmesser anzuwenden wäre.

Die GB 2137026A zeigt ein Elektroschweissfitting mit vier festen Anschlägen am Innendurchmesser des Fittings. Dadurch kann bei der Montage festgestellt werden ob die Rohrenden genügend tief in das Fitting eingeschoben sind.

Nachteilig hierbei ist, dass wenn die Anschläge im Fitting entfernt werden müssen aufgrund einer Montage als Überschiebfitting und durch die stabile Ausgestaltung der Anschläge, ist das ein aufwendiger Vorgang bei dem auch die innere Mantelfläche beschädigt werden und ein Drahtaustritt zur Folge haben kann.

Es ist Aufgabe der Erfindung ein Elektroschweissfitting vorzuschlagen, die sich für die unterschiedlichen Montagearten ohne hohen zusätzlichen Aufwand zuverlässig einsetzen lässt.

Die CH 5533/68, DE 2 311 279, WO 2010/071589 A1, DE 10 2013 009 687 A1 und EP 0 919 761 A1 offenbaren alternative Ausführungsformen eines Elektroschweissfittings.

Diese Aufgabe wird erfindungsgemäss mit einem Elektroschweissfitting gemäß Anspruch 1 gelöst.

Das erfindungsgemässe Elektroschweissfitting aus Kunststoff zum Verschweissen von Kunststoffrohrleitungen weist einen zylindrischen Körper auf. Unter die erfindungsgemässen Elektroschweissfittings fallen neben den im Durchmesser konstant ausgebildeten Fittings auch Reduktionsfittings. Der Körper der Elektroschweissfittings ist vorzugsweise aus einem thermoplastischen Kunststoff hergestellt. Das Elektroschweissfitting weist eine Längsachse, eine Heizdrahtwicklung und Kontakte zur Zuführungen des elektrischen Stroms auf. Das erfindungsgemässe Elektroschweissfitting weist einen Rohranschlag auf, wobei der Rohranschlag an der Innenmantelfläche des Körpers angeordnet ist. Dieser dient dem Erfassen der Einstecktiefe der Rohrenden in das Elektroschweissfitting bzw. dem Begrenzen. Der Rohranschlag ist flexibel bzw. elastisch ausgebildet. Das heisst, wenn das Rohrende in Richtung der Längsachse auf einer Seite des Körpers eingeschoben wird bis hin zum Rohranschlag, neigt sich der Rohranschlag durch das Rohrende, welches auf den Anschlag drückt, auf die andere Seite, bis der Anschlag dann an der Innenmantelfläche anliegt bzw. ansteht wodurch ein stabiler Rohranschlag gewährleistet ist. Durch die elastische Ausgestaltung des Rohranschlags ist gewährleistet, dass der Rohranschlag mittels einer leichten, instabilen Verbindung an der Innenmantelfläche des Körpers angeordnet bzw. angebracht ist und so bei Bedarf leicht entfernt werden kann. Dennoch bildet der Rohranschlag einen stabilen Anschlag für die Rohrenden. Somit soll der Anschlag einerseits stabil ausgeführt sein, anderseits muss er aber leicht entfernbar sein.

Es ist vorteilhaft, wenn der Rohranschlag in Richtung Längsachse elastisch verformbar ist. Dies stellt eine leichte Anbindung des Rohranschlags an die Innenmantelfläche sicher aber bildet dennoch einen stabilen Anschlag, wenn der Rohranschlag in eine Endposition geneigt ist.

Als vorteilhaft hat sich gezeigt, wenn der Rohranschlag bis zum Erreichen einer starren Position neigbar ist, vorzugsweise wird die starre Position durch die Innenmantelfläche gebildet.

Vorzugsweise erstreckt sich der Rohranschlag zumindest entlang eines Bereichs des Umfangs der Innenmantelfläche. Der Rohranschlag erstreckt sich vorzugsweise am Innenumgang des Elektrofittings bzw. Körpers über mindestens einen bestimmten Kreisbogen, wodurch der Rohranschlag sich nicht über den kompletten Innenumfang erstreckt. Durch den Rohranschlag wird gewährleistet, dass das Rohrende nur bis zum Rohranschlag eingeführt wird.

Der Rohranschlag weist mindestens eine Aussparung entlang dessen Verlaufs am Umfangs der Innenmantelfläche auf. Dadurch wird gewährleistet, dass der Heizdraht in einem Vorgang in den Körper eingepflügt werden kann. Der Heizdraht wird auf einer Seite des Elektroschweissfittings durch mehrere Windungen zu einer Heizzone eingepflügt und auf der anderen Seite des Elektroschweissfittings ebenso. Damit die beiden Heizzonen mit demselben Heizdraht bzw. in einem Arbeitsgang eingepflügt werden können, weist der Rohranschlag eine Aussparung im Verlauf entlang des Umfangs an der Innenmantelfläche auf. Diese Aussparung erlaubt es den Heizdraht mittels Einpflügen auf die andere Seite des Fittings zu führen wo die zweite Heizzone eingebracht wird.

Als bevorzugte Ausgestaltung hat sich gezeigt, wenn der Rohranschlag in Richtung der Längsachse in der Mitte des Körpers angeordnet ist. Dadurch sind beide Rohrenden bis zur Mitte hin einschiebbar. Selbstverständlich sind aber auch unsymmetrische Körper denkbar.

Als vorteilhaft hat sich gezeigt, wenn der Rohranschlag an einem Elektroschweissfitting angeordnet ist, das als Reduzierfitting ausgebildet ist, wobei der Rohranschlag am Ende der Heizzone des engeren bzw. kleineren Innendurchmessers des Reduzierfittings angeordnet ist. Das heisst, der Rohranschlag liegt zwischen den beiden Heizzonen der unterschiedlichen Innendurchmesser und ist am Ende der Heizzone des kleineren Innendurchmessers angeordnet. Dies ermöglicht auch einen Anschlag für das auf einer Seite eingeschobenen kleiner Rohrende.

Der Rohranschlag weist einen Fuss und einen Kopf auf bzw. im Querschnitt des Rohranschlags ist der Kopf und der Fuss des Rohranschlags gut ersichtlich. Der Querschnitt mit Kopf und Fuss des Rohranschlags erstreckt sich dann über dessen Verlauf.

Der Fuss ist an der Innenmantelfläche des Körpers angeordnet und weist eine schmalere Breite in Richtung der Längsachse auf als der Kopf aufweist. Der Rohranschlag und der Körper sind einteilig ausgebildet und werden im selben Spritzgussprozess erstellt bzw. der Rohranschlag wird direkt an die Innenmantelfläche mitangespritzt. Vorzugsweise erstreckt sich der Querschnitt des Rohranschlags konstant bzw. gleichbleibend über den Verlauf entlang des Umfangs der Innenmantelfläche über einen Teilbereich des Umfangs. Dadurch, dass der Fuss als schmaler Steg ausgebildet ist, lässt sich der Rohranschlag auch einfach entfernen, wodurch sich das Elektroschweissfitting auch als überschiebbares Fitting einsetzen lässt. Durch den massiveren Kopf wird dennoch gewährleistet, dass das Rohrende am Rohranschlag ansteht sobald der Rohranschlag sich hin zur Innenmantelfläche des Elektroschweissfittings bzw. Körpers neigt.

Es ist vorteilhaft, wenn am Fuss des Rohranschlags eine Sollbruchstelle angeordnet ist, wobei die Sollbruchstelle vorzugsweise jeweils am Ende und am Anfang des Rohranschlags, welcher sich zumindest entlang eines Bereichs des Umfangs der Innenmantelfläche erstreckt, angeordnet ist. Die Sollbruchstelle ermöglicht ein noch einfacheres Entfernen des Rohranschlags indem am Anfang und am Ende dessen Verlaufs eine Querschnittreduktion des Fusses angeordnet ist, wobei diese nur über ein kurzes Teilstück des Verlaufs des Rohranschlags erstreckt.

Die Breite des Kopfs verjüngt in Richtung Fuss. Dadurch erfährt der Anschlag die erforderliche Elastizität aber ist dennoch ein stabiler Anschlag.

Als vorteilhaft hat sich gezeigt, wenn die Verjüngung am Kopf durch einen Winkel zwischen Fuss und Kopf gebildet ist, wobei der Winkel α vorzugsweise > 90° ist.

Dadurch ist gewährleistet, dass der Rohranschlag sich in Richtung Innenmantelfläche neigen kann und dort anliegt und so einen Anschlag für die eingeführten Rohrenden bildet.

Als vorteilhaft hat sich gezeigt, wenn der Winkel auf beiden Seiten des Kopfs angeordnet ist. Dadurch muss bei der Rohrendmontage nicht darauf geachtet werden von welcher Seite das erste Rohrende eingeführt wird.

Vorzugsweise weist die Heizdrahtwicklung zwei Heizzonen auf, wobei die Heizzonen jeweils mehrere Windungen aufweisen, wobei die beiden Heizzonen miteinander verbunden sind. Beide Heizzonen sind jeweils rechts und links vom Rohranschlag angeordnet. Damit ein Heizdraht für beide Heizzonen verwendet werden kann und das Einpflügen des Drahts in einem Arbeitsschritt erfolgen kann verläuft der eingepflügte Draht zwischen den beiden Heizzonen im Bereich der Aussparung des Rohranschlags bzw. durchquert die Mitte der Fittings im Bereich der Aussparung.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine dreidimensionale Ansicht eines erfindungsgemässen Elektroschweissfittings,
Fig. 2 einen Längsschnitt durch ein erfindungsgemässes Elektroschweissfitting,
Fig. 3 eine Schnittansicht durch einen Rohranschlag,
Fig. 4 zwei Längsschnitte mit eingeschobenem Rohrende,
Fig. 5 einen Längsschnitt durch ein Elektroschweissfitting in dem der Verlauf des Heizdrahts eingetragen ist und
Fig. 6 verschiede Formen der Toleranzüberbrückung zwischen Rohrende und Elektroschweissfitting.

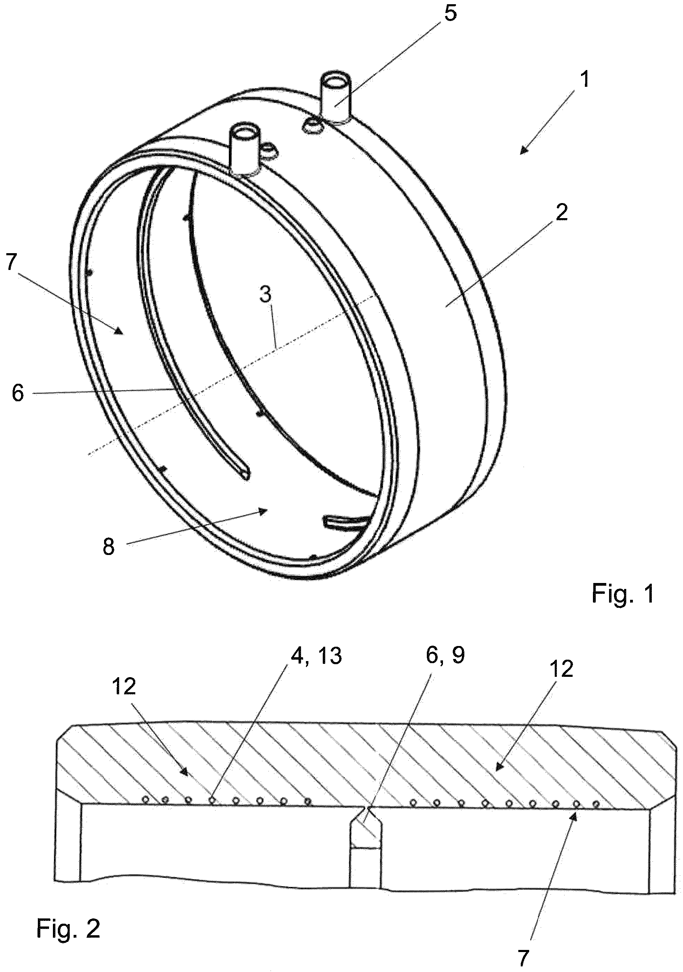

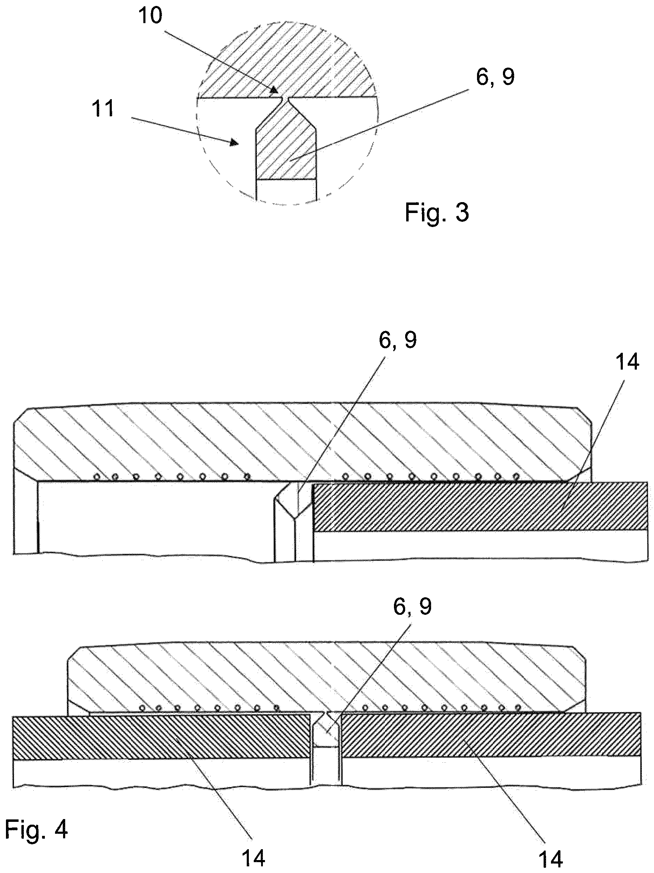

Die in Fig. 1 dargestellte Zeichnung zeigt eine dreidimensionale Ansicht eines erfindungsgemässen Elektroschweissfittings 1. Das Elektroschweissfitting 1 weist einen Körper 2 auf, wobei der Körper 2 vorzugsweise aus einem schweissbaren Kunststoff hergestellt ist. Der Körper 2 weist eine zylindrische Form auf, wobei diese sich um eine Längsachse 3 erstreckt, wobei bei einem Reduzierfitting die zylindrische Form abgesetzt ausfallen kann. Im Körper 2 ist eine Heizdrahtwicklung zum Aufheizen des Kunststoffs und Verschweissen des Körpers 2 mit den eingeführten Rohrenden 14 angeordnet, ersichtlich in Fig. 4. An der Innenmantelfläche 7 des erfindungsgemässen Elektroschweissfittings 1 ist ein Rohranschlag 6 angeordnet. Dieser dient der Sicherstellung, dass die Rohrenden 14 bis an den Rohranschlag 6 eingeschoben werden um eine gute Schweissung, welche über die maximale Fläche ausgeführt wird, zu erzielen. Da das erfindungsgemässe Elektroschweissfitting 1 auch als Überschiebfitting einsetzbar sein soll, muss der Rohranschlag 6 leicht und ohne Folgeschäden an der Innenmantelfläche 7 entfernbar sein. Dies wird dadurch erreicht, dass der Rohranschlag 6 flexibel und elastisch ausgebildet ist. Dadurch kann der Rohranschlag 6 einfach entfernt werden, ohne dass harte und starre Rückstände an der Innenmantelfläche 7 verbleiben oder diese mit einem Werkzeug entfernt werden müssen, dass Schäden an der Innenmantelfläche 7 entstehen könnten.

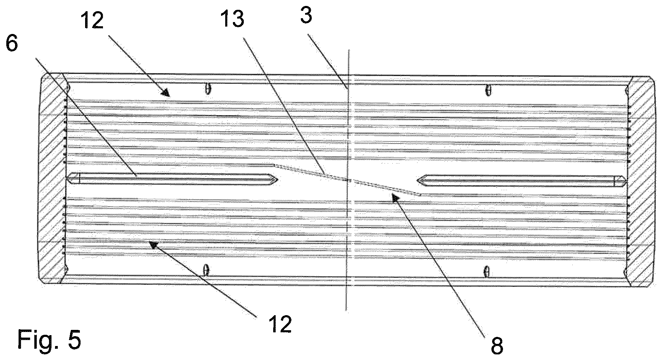

In Fig. 1 ist auch gut ersichtlich, dass eine Aussparung 8 im entlang des Innenumfangs verlaufenden Rohranschlag 6 vorliegt. Diese ermöglicht ein durchgehendes Einpflügen des Heizdrahtes 13 in den Körper 2. Das heisst, es kann an einem Ende des Körpers 2 mit dem Einpflügen des Heizdrahts 13 zur Bildung der ersten Heizzone 12 begonnen werden. In der Mitte passiert der Heizdraht 13 mittels Einpflügen die Aussparung 8 und die zweite Heizzone 12 kann auf der gegenüberliegenden Seite der ersten Heizzone 12 eingepflügt werden. Dies ist gut in Fig. 5 ersichtlich, in der der Verlauf des Heizdrahts 13 dargestellt ist, wobei der Heizdraht selbstverständlich nicht ersichtlich ist da er in das Kunststoffmaterial des Fittings eingepflügt ist und der Verlauf nur schematisch angegeben ist. Dadurch kann die Heizdrahtwicklung 4, welche aus einem zusammenhängenden Draht 13 gebildet wird, das erfindungsgemässen Elektroschweissfitting 1 in einem Arbeitsschritt eingepflügt werden. Fig. 2 zeigt die beiden Heizzonen 12 deutlich. Es ist vorteilhaft, wenn der Rohranschlag 6, wie in Fig. 3 dargestellt, einen Querschnitt 9 aufweist, der einen Fuss 10 und einen Kopf 11 aufweist. Der Fuss 10 ist an der Innenmantelfläche 7 des Körpers 2 angeordnet. Der Körper 2 und der Rohranschlag 6 sind als einteiliges Spritzgussteil ausgebildet, wie auch die Kontakte 5 mitintegriert sind. Der Fuss 10 weist eine geringere Breite in Richtung der Längsachse 3 auf als der Kopf 11 des Rohranschlags 6. Dadurch wird gewährleistet, dass der Rohranschlag flexibel und elastisch ist und dadurch einfach von der Innenmantelfläche 7 entfernt werden kann wie aber auch einen festen Anschlag 6 bildet. Fig. 4 zeigt ein eingeführtes Rohrende 14 und die Funktion des Rohranschlags 6. Das Rohrende 14 wird, wie in der oberen Abbildung dargestellt, bis zum Rohranschlag 6 eingeschoben und dann noch etwas weiter bis sich der Rohranschlag 6, wie in der unteren Abbildung dargestellt, derart geneigt hat, dass der Anschlag 6 bzw. der Kopf 11 fest an der Innenmantelfläche 7 ansteht und so einen fixen Anschlag 6 für die Einschubtiefe der Rohre bildet.

Vorzugsweise weist der Querschnitt 9 einen Winkel α zwischen Kopf 11 und Fuss 10 auf der ein optimales Anliegen des Rohranschlags 6 gewährleistet und einen stabilen Anschlag 6 bildet. Vorzugsweise ist der Winkel > 90° ausgestaltet.

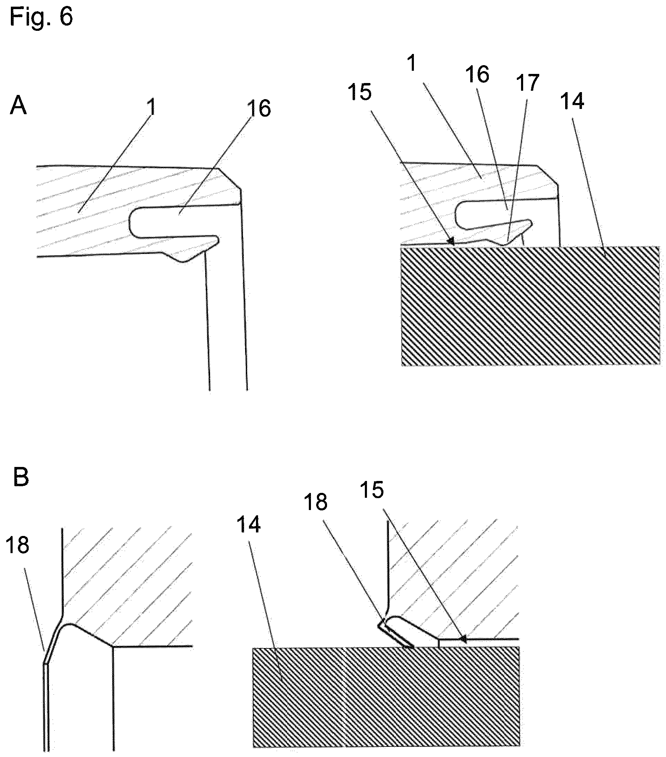

Die Abbildungen in der Fig. 6 zeigen mögliche Ausführungsformen um den Spalt 15 zu überbrücken, der sich zwischen den eingeführten Rohrenden 14 und eines Elektroschweissfittings 1 aufgrund der Toleranzen bildet, wobei die jeweils links dargestellte Abbildung das Elektroschweissfitting 1 ohne eingeschobenes Rohrende und die rechte Abbildung mit eingeschobenem Rohrende zeigt. Die obere Variante A zeigt eine Nut 16 oder auch mehrere Nuten 16, welche reihum entlang der Stirnfläche angeordnet sind, wobei auf der Höhe der Nuten 16 jeweils gegenüberliegend an der Innenmantelfläche noppenartige Erhöhungen 17 ausgebildet sind. Wird nun das Rohrende 14 eingeschoben, drückt der Aussendurchmesser des Rohrendes 14 auf die Noppen17 und durch die Nuten 16 können diese die Abmessung des Durchmessers elastisch aufnehmen bzw. lassen sich gegen aussen drücken, wodurch das Rohrende 14 in das Elektroschweissfitting 1 eingeschoben werden kann und auch bereits leicht fixiert ist.

Alternativ ist, wie in den unteren Abbildungen B dargestellt, eine Art Lippe 18 an der Stirnseite des Elektroschweissfittings 1 angeordnet. Diese soll ebenfalls den Spalt 15 zwischen Rohraussendurchmesser und Fittingsinnendurchmesser überbrücken.

### Bezugszeichenliste

- 1: Elektroschweissfitting
- 2: Körper
- 3: Längsachse
- 4: Heizdrahtwicklung
- 5: Kontakt Stromzuführung
- 6: Rohranschlag
- 7: Innenmantelfläche
- 8: Aussparung
- 9: Querschnitt Rohranschlag
- 10: Fuss
- 11: Kopf
- 12: Heizzone
- 13: Heizdraht
- 14: Rohrende
- 15: Spalt
- 16: Nut
- 17: Noppen
- 18: Lippe

## Patentansprüche

1. Elektroschweissfitting (1) aus Kunststoff zum Verschweissen von Kunststoffrohrleitungen enthaltend einen zylindrischen Körper (2), eine Längsachse (3), eine Heizdrahtwicklung (4), Kontakte (5) zur Zuführungen des elektrischen Stroms und einen Rohranschlag (6), wobei der Rohranschlag (6) an der Innenmantelfläche (7) des Körpers (2) angeordnet ist, wobei der Rohranschlag (6) flexibel bzw. elastisch ausgebildet ist, wobei der zylindrische Körper (2) und der daran angeordnete Rohranschlag (6) im selben Spritzgussverfahren einteilig hergestellt sind, wobei der Querschnitt (9) des Rohranschlags einen Fuss (10) und einen Kopf (11) aufweist, wobei der Fuss (10) an der Innenmantelfläche (7) des Körpers (2) angeordnet ist und eine schmalere Breite in Richtung der Längsachse (3) als der Kopf (11) aufweist, wobei sich die Breite des Kopfs (11) in Richtung Fuss (10) verjüngt, wobei der Rohranschlag (6) mindestens eine Aussparung (8) entlang dessen Verlaufs am Umfang der Innenmantelfläche (7) aufweist, **dadurch gekennzeichnet, dass**, die Heizdrahtwicklung durch Einpflügen eines Drahts in die Innenmantelfläche des zylindrischen Körpers (2) eingebracht ist, wobei der eingepflügte Draht die Mitte des Fittings in Richtung der Längsachse im Bereich der Aussparung durchquert.

2. Elektroschweissfitting (1) nach Anspruch 1, **dadurch gekennzeichnet, dass** der Rohranschlag (6) in Richtung Längsachse (3) elastisch verformbar ist.

3. Elektroschweissfitting (1) nach einem der Ansprüche 1 oder 2, **dadurch gekennzeichnet, dass** der Rohranschlag (6) bis zum Erreichen einer starren Position neigbar ist, vorzugsweise wird die starre Position durch die Innenmantelfläche (7) gebildet.

4. Elektroschweissfitting (1) nach einem der Ansprüche 1 bis 3, **dadurch gekennzeichnet, dass** der Rohranschlag (6) sich zumindest entlang eines Bereichs des Umfangs der Innenmantelfläche (7) erstreckt.

5. Elektroschweissfitting (1) nach einem der Ansprüche 1 bis 4, **dadurch gekennzeichnet, dass** der Rohranschlag (6) in Richtung der Längsachse (3) in der Mitte des Körpers (2) angeordnet ist.

6. Elektroschweissfitting nach einem der Ansprüche 1 bis 5, **dadurch gekennzeichnet, dass** der Rohranschlag (6) an einem Elektroschweissfitting (1) das als Reduzierfitting ausgebildet ist, am Ende der Heizzone (12) des engeren bzw. kleineren Innendurchmessers des Reduzierfittings angeordnet ist.

7. Elektroschweissfitting (1) nach einem der Ansprüche 1 bis 6, **dadurch gekennzeichnet, dass** sich der Querschnitt (9) des Rohranschlags (6) konstant über den Verlauf entlang des Umfangs der Innenmantelfläche (7) über einen Teilbereich des Umfangs erstreckt.

8. Elektroschweissfitting (1) nach Anspruch 7, **dadurch gekennzeichnet, dass** am Fuss (10) des Rohranschlags (6) eine Sollbruchstelle angeordnet ist, wobei die Sollbruchstelle vorzugsweise jeweils am Ende und am Anfang des Rohranschlags (6) angeordnet ist.

9. Elektroschweissfitting (1) nach Anspruch 8, **dadurch gekennzeichnet, dass** die Verjüngung am Kopf (10) durch einen Winkel zwischen Fuss (10) und Kopf (11) gebildet ist, wobei der Winkel α vorzugsweise > 90° ist.

10. Elektroschweissfitting (1) nach Anspruch 9, **dadurch gekennzeichnet, dass** der Winkel α auf beiden Seiten des Kopfes (11) angeordnet ist.

11. Elektroschweissfitting (1) nach einem der Ansprüche 1 bis 10, **dadurch gekennzeichnet, dass** die Heizdrahtwicklung (4) zwei Heizzonen (12) bildet, wobei die Heizzonen (12) jeweils mehrere Windungen aufweisen, wobei die beiden Heizzonen miteinander verbunden sind.

## Claims

1. Electroweld fitting (1) made of plastic for welding plastic pipelines, containing a cylindrical body (2), a longitudinal axis (3), a heating wire winding (4), contacts (5) for supplying the electric current and a pipe stop (6), wherein the pipe stop (6) is arranged on the inner lateral surface (7) of the body (2), wherein the pipe stop (6) is designed to be flexible and resilient, wherein the cylindrical body (2) and the pipe stop (6) arranged thereon are produced in one piece in the same injection moulding method, wherein the cross section (9) of the pipe stop has a foot (10) and a head (11), wherein the foot (10) is arranged on the inner lateral surface (7) of the body (2) and has a narrower width in the direction of the longitudinal axis (3) than the head (11), wherein the width of the head (11) tapers in the direction of the foot (10), wherein the pipe stop (6) has at least one slot (8) along its course on the circumference of the inner lateral surface (7), **characterized in that** the heating wire winding is incorporated by embedding a wire in the inner lateral surface of the cylindrical body (2), wherein the embedded wire crosses through the centre of the fitting in the direction of the longitudinal axis in the region of the slot.

2. Electroweld fitting (1) according to Claim 1, **characterized in that** the pipe stop (6) is resiliently deformable in the direction of the longitudinal axis (3).

3. Electroweld fitting (1) according to either of Claims 1 and 2, **characterized in that** the pipe stop (6) can be tilted until a rigid position is achieved, the rigid position is preferably established as a result of the inner lateral surface (7).

4. Electroweld fitting (1) according to one of Claims 1 to 3, **characterized in that** the pipe stop (6) extends at least along a region of the circumference of the inner lateral surface (7).

5. Electroweld fitting (1) according to one of Claims 1 to 4, **characterized in that** the pipe stop (6) is arranged in the centre of the body (2) in the direction of the longitudinal axis (3).

6. Electroweld fitting according to one of Claims 1 to 5, **characterized in that** the pipe stop (6) on an electroweld fitting (1) which is designed as a reduction fitting is arranged at the end of the heating zone (12) of the narrower or smaller inner diameter of the reduction fitting.

7. Electroweld fitting (1) according to one of Claims 1 to 6, **characterized in that** the cross section (9) of the pipe stop (6) extends in a constant manner over the course along the circumference of the inner lateral surface (7) over a sub-region of the circumference.

8. Electroweld fitting (1) according to Claim 7, **characterized in that** a predetermined breaking point is arranged at the foot (10) of the pipe stop (6), wherein the predetermined breaking point is preferably arranged in each case at the end and at the start of the pipe stop (6).

9. Electroweld fitting (1) according to Claim 8, **characterized in that** the taper at the head (10) is formed by an angle between the foot (10) and the head (11), wherein the angle α is preferably > 90°.

10. Electroweld fitting (1) according to Claim 9, **characterized in that** the angle α is arranged on both sides of the head (11).

11. Electroweld fitting (1) according to one of Claims 1 to 10, **characterized in that** the heating wire winding (4) forms two heating zones (12), wherein the heating zones (12) each have a plurality of windings, wherein the two heating zones are connected to one another.

## Revendications

1. Raccord de soudage électrique (1) en matière plastique destiné au soudage de conduites tubulaires en plastique contenant un corps cylindrique (2), un axe longitudinal (3), un enroulement de fil chauffant (4), des contacts (5) destinés à amener le courant électrique et une butée de tuyau (6), la butée de tuyau (6) étant disposée sur la surface d'enveloppe intérieure (7) du corps (2), la butée de tuyau (6) étant de configuration flexible ou élastique, le corps cylindrique (2) et la butée de tuyau (6) qui y est disposée étant fabriqués en une seule pièce dans le même procédé de moulage par injection, la section transversale (9) de la butée de tuyau possédant un pied (10) et une tête (11), le pied (10) étant disposé au niveau de la surface d'enveloppe intérieure (7) du corps (2) et présentant une largeur plus étroite en direction de l'axe longitudinal (3) que la tête (11), la largeur de la tête (11) se rétrécissant en direction du pied (10), la butée de tuyau (6) possédant au moins un évidement (8) le long de son tracé sur la périphérie de la surface d'enveloppe intérieure (7), **caractérisé en ce que** l'enroulement de fil chauffant est incorporé par enfoncement d'un fil dans la surface d'enveloppe intérieure du corps cylindrique (2), le fil enfoncé traversant le centre du raccord en direction de l'axe longitudinal dans la zone de l'évidement.

2. Raccord de soudage électrique (1) selon la revendication 1, **caractérisé en ce que** la butée de tuyau (6) est déformable élastiquement en direction de l'axe longitudinal (3).

3. Raccord de soudage électrique (1) selon l'une des revendications 1 ou 2, **caractérisé en ce que** la butée de tuyau (6) est inclinable jusqu'à atteindre une position rigide, la position rigide est de préférence formée par la surface d'enveloppe intérieure (7).

4. Raccord de soudage électrique (1) selon l'une des revendications 1 à 3, **caractérisé en ce que** la butée de tuyau (6) s'étend au moins le long d'une zone du périmètre de la surface d'enveloppe intérieure (7).

5. Raccord de soudage électrique (1) selon l'une des revendications 1 à 4, **caractérisé en ce que** la butée de tuyau (6) est disposée en direction de l'axe longitudinal (3) au centre du corps (2).

6. Raccord de soudage électrique selon l'une des revendications 1 à 5, **caractérisé en ce que** la butée de tuyau (6), sur un raccord de soudage électrique (1) qui est réalisé sous la forme d'un raccord de réduction, est disposée à l'extrémité de la zone de chauffage (12) du diamètre intérieur plus étroit ou plus petit du raccord de réduction.

7. Raccord de soudage électrique (1) selon l'une des revendications 1 à 6, **caractérisé en ce que** la section transversale (9) de la butée de tuyau (6) s'étend constamment sur le tracé le long de la périphérie de la surface d'enveloppe intérieure (7) sur une zone partielle de la périphérie.

8. Raccord de soudage électrique (1) selon la revendication 7, **caractérisé en ce qu'**un point de rupture voulu est disposé au niveau du pied (10) de la butée de tuyau (6), le point de rupture voulu étant disposé de préférence respectivement à la fin et au début de la butée de tuyau (6).

9. Raccord de soudage électrique (1) selon la revendication 8, **caractérisé en ce que** le rétrécissement au niveau de la tête (10) est formé par un angle entre le pied (10) et la tête (11), l'angle α étant de préférence > 90°.

10. Raccord de soudage électrique (1) selon la revendication 9, **caractérisé en ce que** l'angle α est disposé des deux côtés de la tête (11).

11. Raccord de soudage électrique (1) selon l'une des revendications 1 à 10, **caractérisé en ce que** l'enroulement de fil chauffant (4) forme deux zones de chauffage (12), les zones de chauffage (12) présentant chacune plusieurs spires, les deux zones de chauffage étant connectées l'une à l'autre.
